# EUROPEAN PATENT APPLICATION

(11) **EP 1 946 636 A1**
(43) Date of publication of application: **23.07.2008**
(21) Application number: 06764354.4
(22) Date of filing: 29.05.2006
(51) Int. Cl.: A01M 1/20

(54) **BAIT HOLDER FOR DESTROYING TERMITE ACTIVITY AND DETECTION METHODS**

(30) Priority: 04.11.2005 ES 200502687
(71) Applicant: Termitania, S.L., E-48100 Munguía (ES)
(72) Inventor: PEREZ DE LOS BUEIS, Carmelo, E-48100 Munguía, Vizcaya (ES)
(74) Representative: Tari Lazaro, Aida
(86) International application number: PCT/ES2006/000301
(87) International publication number: WO 2007/051873

(57) **Abstract**

The invention relates to a bait holder for destroying termite activity. The inventive bait holder has a wider range of features owing to the special design thereof and can be used for detecting and easily ascertaining the level of infestation both on the surface layer and inside the soil. The invention enables the combined use of samples and cartridges of bait in the form of sheets and blocks, comprising a sealed cover for preventing improper handling, and systems for verifying, diagnosing and controlling the level of infestation in a reliable, convenient and safe manner in order to obtain information relating to the position and state of the bait holders and to ascertain whether or not they have been consumed by the termites without the bait holders being opened.

## Description

### PURPOSE OF THE INVENTION

The purpose of this invention is to provide a new bait holder located on the ground under their level which, because of its characteristics and design permits better control, verification, diagnosis and destruction of termites as a consequence of being able to place one to four cartridges or samples, depending on the degree of infestation, inside the bait-holder box in sheet, powder or block form, and the ease of inspecting the bait-holder in order to ascertain the degree of termite activity without having to open it.

### STATE OF THE ART

Normally, underground termites that characteristically nest in the soil, frequently form enormous colonies from which the members move out in search of food, for which reason they construct galleries or passageways in the soil outside the nest; and it is also known that termites possess the ability to communicate the location of a food source to other termites inside the nest.
This is why current bait-holders do not provide an adequate response to the number of termites that can be detected and the degree of infestation that can be controlled and so, most of the time, they are considered very limited due to the significant degree of infestation.
It is thus considered necessary to obtain bait-holders with enhanced performance.

### DISCLOSURE OF THE INVENTION

Because of its special design, the new bait-holder provides greater efficiency in the control procedure and in termite infestation suppression through the possibilities of increasing the fitting of cartridges from one to four in the wood samples as well as the cartridges for holding toxic pesticide substances and also, other types of bait, such as sheets can be employed.

Similarly, the bait-holder safely guarantees that the toxic bait is only applied in specific zones in the area and always after confirming termite existence and activity.
Other characteristics of the new bait-holder are that it can be used to detect and control termites on the ground surface, by fitting the upper section of the bait-holder, just below the cover, a number of holes in a triangular pattern that allow termites on the surface layer of the ground, to enter and gain access to the entire box surface.

In order to prevent improper use of the bait-holder, a lock is fitted that has a cover that prevents soil from entering and spoiling its operation.

Taking into consideration that termites consume cellulose as food and that this is industrially obtained from wood and that they are a serious menace throughout the entire world to structures and other objects containing said polysaccharide, the new bait-holder includes the possibility of employing a solid block of wood as bait material, or wood samples or cartridges and, in addition, given the box dimensions, powdered cellulose and water can be very easily mixed for simple handling when inserting, extracting and mixing; in a similar fashion bait in block form can be used, which can be pellets in various shapes.
Another new feature is bait in sheet form for greater economy and ecology, because partially consumed bait does not have to be replaced, but instead, sheets are added in function of requirements.

Additionally, given the bait-holder dimensions and the fact it is made of very strong plastic, the cover can be silk-screened with information so that the bait-holder can be customised and easily identified by the verification and control stations once installed on or in the ground, together with whatever other data is considered necessary.

Moreover, the bait-holder of this invention can be stored by inserting one inside another, which provides a big advantage in storage and transport.

Another significant characteristic of the invention is the possibility of combining the termite verification, control and destruction processes since various combined actions can be adopted by employing bait samples or cartridges at the same time as those of pesticide in an adjacent manner.

Similarly, another new feature of the invention is the possibility to inspect the bait-holder status without having to open it, with respect to having been eaten or not by termites; also to know whether the bait has been eaten by manual radio frequency without a visual inspection and, in the same way, the detector can be fixed for installation inside the house or building, which will receive the signal or send its SMS message by GSM device to mobile radios.

### BRIEF DESCRIPTIONS OF THE DRAWINGS

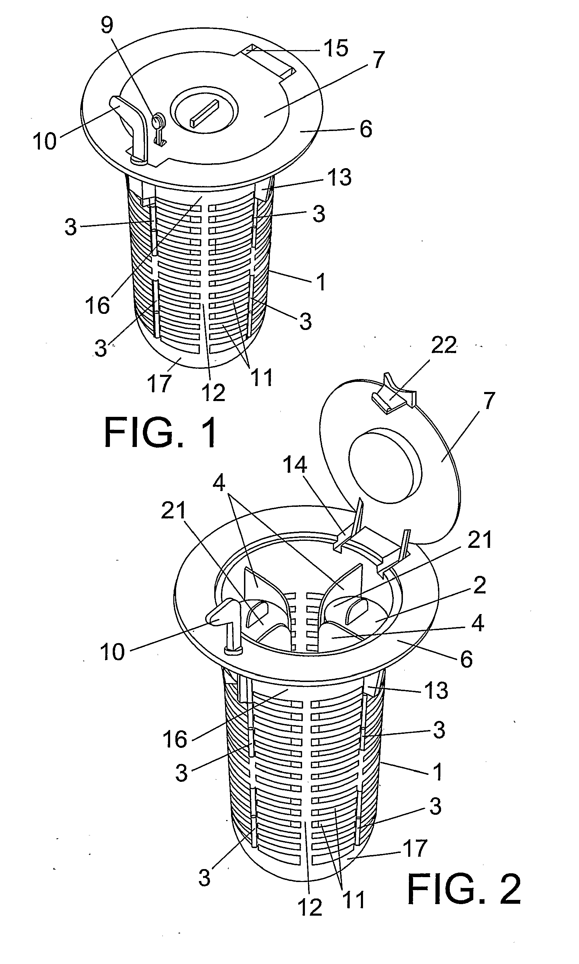

Figure 1.- Perspective of the bait-holder assembly.
Figure 2.- Perspective of the bait-holder assembly in open arrangement.

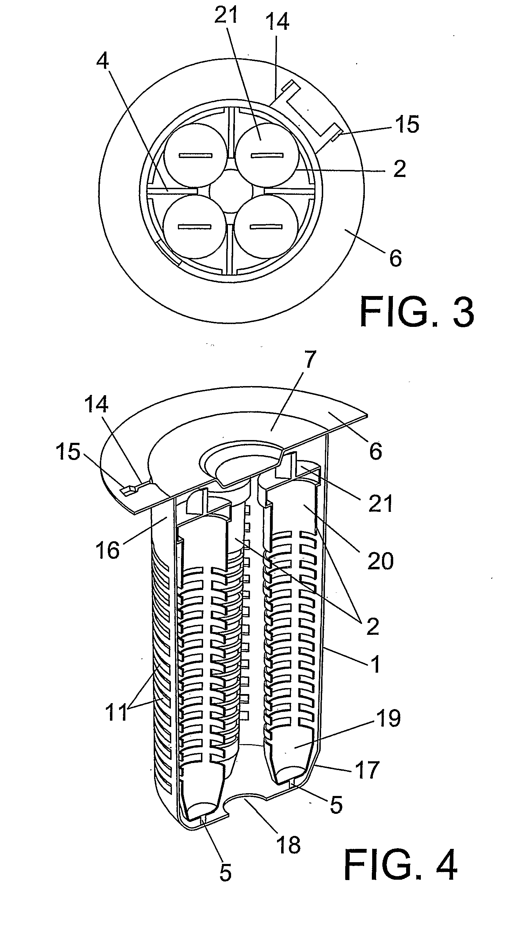

Figure 3.- Plan view of the bait-holder assembly, without cover and with four cartridges.
Figure 4.- Perspective view with transversal section.

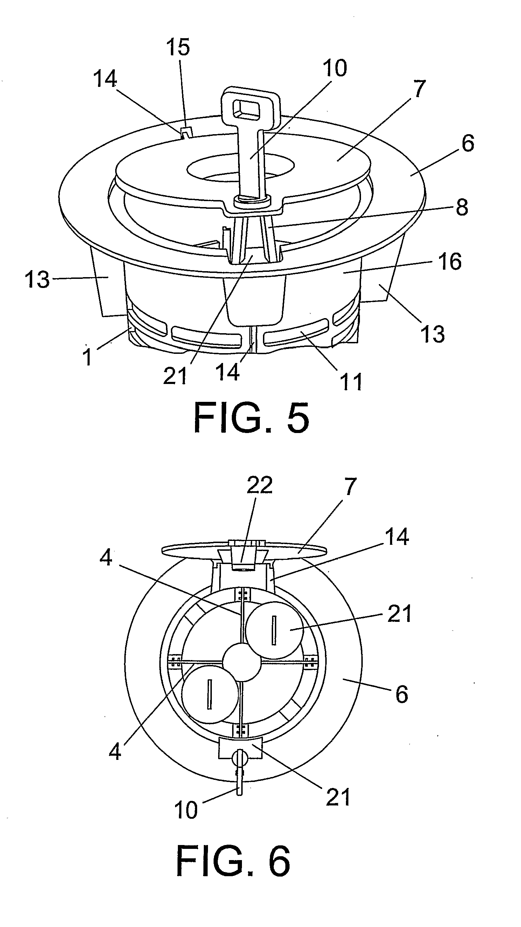

Figure 5. Perspective view with details in open cover position, with key.
Figure 6.- Plan view, with open cover and two cartridges.

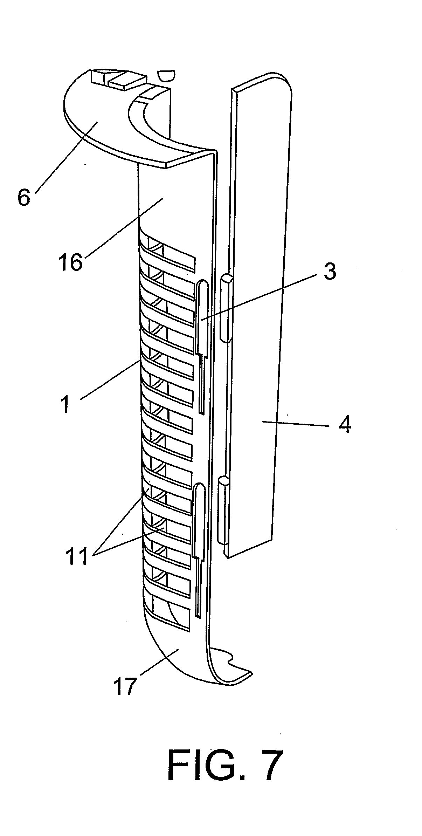

Figure 7.- details in perspective in ¼ section of plastic sheet coupling.

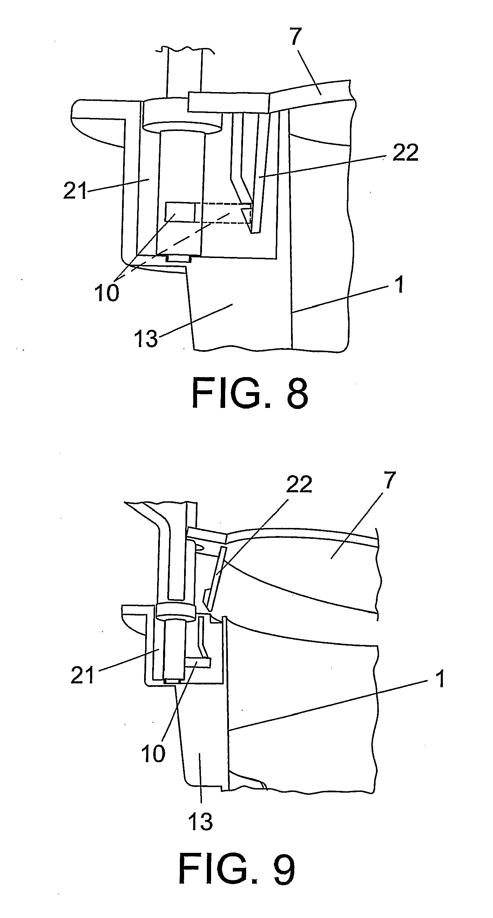

Figures 8 and 9.- Perspective views of key-operated opening and closing device.

### PREFERENTIAL EMBODIMENT EXAMPLE OF THE INVENTION

The bait-holder of this invention follows a design that allows the positioning of various samples or cartridges that can be bait treated with pesticide as well as untreated bait (samples) inside the bait holder, preferably from one to four in number. Thus, the bait-holder comprises an exterior box (1) in the form of an inverted truncated cone, with slot perforations (11) arranged for permanent installation in the ground below the soil level and perforated cartridges (2) housed inside the box in a dismantable manner and also truncated cone shaped in a complementary configuration with the box.

The slots (11) in the box consist of four blocks separated by longitudinal covered zones (12) without any slots that contain four reinforcement tabs (13) on the outside and longitudinal lanes (3) on the inside for holding separation sheets that permit the fitting of the cartridges (2). These sheets can be removed, which permits the fitting of one to four, combining samples or cartridges as desired (one in each space), removing them will allow cellulose powder or blocks to be handled and employed, or even combinations of wet cellulose powder, bait in blocks and cartridges with excellent ease of handling and excellent handling ease and extraordinary contact with the bait and soil and ground infested with termites.

Each of the said blocks of slots is subdivided into two completely individual ones so that the entire exterior box revolution surface comprises eight blocks of slots.

The cartridges housed inside the box initially contain non-toxic bait material in order to adequately establish the level of termite infestation, with one to four being fitted depending on the degree observed in accordance with termite activity.

The slots in the box and cartridges are carefully aligned for which reason the cartridges are fitted with end-stops (5) so that they fully correspond to the persistent termite incursion galleries in virtue of the precise alignment of the box apertures and replaceable cartridges.

The exterior box (1) includes zones without any slots in both lower (17) and upper sections (16), with the particularity in which the lower section contains a drainage hole (18) and that the upper section (16) has a projecting circular ring (6) for receiving a cover (7), for which reason it includes longitudinal slots (14), with two cylindrical perforations (15) for housing the projecting cover ribs. This referred cover can be completely removed from the box to facilitate transport.

The cartridges (2) are inverted truncated cones corresponding to the exterior box (1) surface, with four blocks of slots corresponding to the slots in the exterior box (1) due to the effect of the end-stops (5) and has closed zones without any slots in the cone-shaped lower section (19 and the cylindrical upper section (20), which also includes a threaded hole for a closing plug (21) with a central raised section that can be used as a handle.

These cartridges can be of different colours or only the plugs, for example, red and blue to indicate whether the bait inside has been treated (pesticide) or not (sample).

Another preferred embodiment of this invention and one that is a new possibility offered by the bait-holder, is to use only the box (1), without sheets, samples or cartridges in order to fill it with powdered cellulose or powdered bait to be mixed with water inside the box, the design of which permits the technicians to simply introduce and extract the cellulose, as well as mix it.

Similarly, the design of the bait-holder of this invention enables bait in sheet form to be used, which can be introduced inside the cartridges (2) or introduce the sheets alone inside the box (1), which allows the option of covering all the free spaces in the box (1), especially those in the upper section, in order to have a greater surface of attraction for the termites.
Moreover, bait in blocks can be employed, which could be pellets of various shapes used alone inside the box (1) or inside cartridges (2).

In order to prevent improper handling of the bait-holders and accidents involving children or domestic animals, the circular ring (6) part of the exterior box includes a housing that permits the coupling of a cover (7), with a locking system comprising two trapezoidal pins (8) with hemispherical housings that couple to a square aperture (21) in the box ring and which are located on a square prolongation (22) of the circular cover, which presents an upper circular part, with hemispherical housings at the ends of the perpendicular diameters to receive the four cylindrical studs on the key (10), which slides through the hemispherical cavity of the two pins where rotation frees the same from their fastening. This lock may be like this or have another form, which must also guarantee lock security. The lock has a cover (9) to prevent soil entering inside. The exterior box configuration of the bait-holder enables them to be held inside one another, something that facilitates both transport and storage.

Another significant new characteristic of this invention to respond to bait-holder verification, diagnosis and control in a safe, simple, reliable fashion in order to establish the situation and status of the bait-holder with respect to whether the bait has been consumed by the termites or not.

To this end, various solutions are provided, all of which are considered within this invention.

As a first solution, the bait-holder cover (7) includes a mechanically-operated viewport, which, for example, shows blue in its normal position, which turns red to red when the bait has been consumed by the termites. This change takes place because the bait that is inside the box (1) is held in place by clips at either end which, in turn are connected to a cylinder by means of an extendable element (cable or rubber) which maintains it fixed in place, but as the bait is eaten, the clips no longer exert any pressure and the cable looses tension and operates the device that forces the viewport plastic plate to move and reveal its colour, for example, red.
This solution has the advantage by which it is not necessary to open the bait-holder in order to verify whether the bait has been consumed by the termites or not since the viewport colour only has to be inspected.

Another solution is to eliminate the viewport from the mechanism in the previous solution and install another system inside the cover which emits an RF signal by means of a battery-operated chip when the bait has been consumed by the termites because this causes the extendable element to lose its tension and produces the RF signal that is received by a mobile, manual RF detector.

In this way, when the corresponding technician is close to the bait-holder is made aware of its status and consequently decide what has to be done, without any need to perform a visual inspection.
The RF detector could be fixed and installed inside the house or building that is surrounded by bait-holders and which receives the corresponding warning signal when a bait-holder has been visited by termites. The fixed detector provides a visual warning that is activated when the RF signal is received so that the mobile detector can be used to establish precisely which bait-holder has been invaded by termites.
The fixed detector can make use of software that can provide the exact coordinates or indicate them on a map when the RF signal is emitted by the corresponding bait-holder, which automatically identifies it, without having to employ a mobile detector; in the same way, the fixed detector can incorporate a GSM device that will send messages to previously established mobile phones when the system is tripped and detects that the bait is being attacked by termites, which also identifies the bait-holder to be inspected and its location.
In addition, when the bait-holder becomes difficult to locate because of the uncontrolled increase in undergrowth etc and it becomes buried, a piece of steel or other metal is incorporated so that it can be located and identified using a metal detector.

## Claims

1. A bait-holder for destroying termite activity, together with detection procedures that is **characterised in that** it comprises an exterior box arranged for permanent installation in the ground below the soil level, perforated by slots and perforated cartridges, both in the form of inverted truncated cones which, given the box dimensions, is able to hold the respective cartridges, preferably one to four units in a removable fashion in a complementary configuration with the box, in which both pesticide-treated and untreated bait can be placed.

2. A bait-holder for destroying termite activity, together with detection procedures in accordance with the first claim that is **characterised in that** the slots in the box consist of four blocks separated by longitudinal covered zones without any slots that contain four reinforcement tabs on the outside and longitudinal lanes on the inside for holding separation sheets that permit the fitting of the cartridges. Each of the said blocks of slots is subdivided into two completely individual ones so that the entire exterior box revolution surface comprises eight blocks of slots.

3. A bait-holder for destroying termite activity, together with detection procedures in accordance with the previous claims that is **characterised in that** the exterior box includes zones without any slots in both lower and upper sections, with the particularity in which the lower section contains a drainage hole and that the upper section has a projecting circular ring for receiving a cover, for which reason it includes longitudinal slots, with two cylindrical perforations for housing the projecting cover ribs. This referred cover can be completely removed from the box.

4. A bait-holder for destroying termite activity, together with detection procedures in accordance with the previous claims that is **characterised in that** the cartridges are inverted truncated cones corresponding to the exterior box surface, with four blocks of slots corresponding to the slots in the exterior box due to the effect of the corresponding end-stops in the lower section, and has closed zones without any slots in the cone-shaped lower section and the cylindrical upper section, which also includes a threaded hole for a closing plug with a central raised section that can be used as a handle, the cartridges or plugs are identified and differentiated by different colours to indicate whether the interior bait is pesticide or sample.

5. A bait-holder for destroying termite activity, together with detection procedures in accordance with the previous claims that is **characterised in that** in order to prevent improper handling of the bait-holders, the ring part of the exterior box includes a circular housing that permits the coupling of a cover, with a locking system preferably comprising two trapezoidal pins with hemispherical housings that couple to a square aperture of the box ring and which are located on a square prolongation of the circular cover, which presents an upper circular part, with hemispherical housings at the ends of the perpendicular diameters to receive the four cylindrical studs on the key, which slides through the hemispherical cavity of the two pins where rotation frees the same from their fastening. The lock has a cover to prevent soil entering inside.

6. A bait-holder for destroying termite activity, together with detection procedures in accordance with the previous claims that is **characterised in that** under the exterior box cover, there are a number of holes in a triangular pattern that allow termites on the surface layer of the ground, to enter and gain access to the entire box surface.

7. A bait-holder for destroying termite activity, together with detection procedures in accordance with the previous claims that is **characterised in that** due to the effect of the guides inside the box, the plastic separation sheets can be removed, leaving the box completely free so that cellulose powder or blocks mixed with water can be introduced, which will achieve greater contact with the termites, bait in sheets can also be used, either in cartridges or only the sheets, which can be added in accordance with requirements, or bait in block form or pellets which can adopt any shape, and which can be inside cartridges or loose inside the box, similarly, the plastic sheets being removable, from one to four can be fitted, combining them as desired in accordance with needs, samples or cartridges, together with wet powdered cellulose or in block as bait in block form.

8. A bait-holder for destroying termite activity, together with detection procedures in accordance with the previous claims that is **characterised in that** there is a viewport in the bait-holder cover that can display two colours, for example blue (bait-holder does not contain termites) and, for example, red which would indicate that the bait had been eaten by termites, with the colour change being produced (to red in this example), because the bait that is inside the box is held in place by clips at either end which, in turn are connected to a cylinder by means of an extendable element (cable or rubber) which maintains it fixed in place, but as the bait is eaten, the clips no longer exert any pressure and the cable looses tension and operates the device that forces the viewport plastic plate to move and reveal its colour, for example, red.

9. A bait-holder for destroying termite activity, together with detection procedures in accordance with claim 8 that is **characterised in that** the bait-holder viewport is replaced by another system inside the cover which emits an RF signal by means of a battery-operated chip when the extendable element loses its tension as the bait has been consumed by the termites. The referred signal is received by a mobile, manual RF detector, which could be fixed and installed inside the house or building and which provides a visual warning when the RF signal is received so that the mobile detector can be used to establish precisely which bait-holder has been invaded.

10. A bait-holder for destroying termite activity, together with detection procedures in accordance with claim 9 that is **characterised in that** the fixed detector can make use of software to provide the necessary identifying coordinates when the infested bait-holder emits the RF signal, and which could optionally incorporate a GSM device that can send SMS to previously established mobile phones when the system is tripped and detects that the bait is being attacked.

11. A bait-holder for destroying termite activity, together with detection procedures in accordance with the previous claims that is **characterised in that** it incorporates a piece of steel or other metal that can be identified by a metal detector.
